# EUROPEAN PATENT APPLICATION

(11) **EP 1 503 592 A1**
(43) Date of publication of application: **02.02.2005**
(21) Application number: 04254444.5
(22) Date of filing: 22.07.2004
(51) Int. Cl.: H04N 7/24

(54) **Editing apparatus, bit rate control method, and bit rate control program**

(30) Priority: 30.07.2003 JP 2003283197
(71) Applicant: SONY CORPORATION, Tokyo 141 (JP)
(72) Inventor: Yamamoto, Toshiaki, c/o Sony Corporation, Tokyo (JP); Sugie, Yoshiyuki, c/o Sony Corporation, Tokyo (JP)
(74) Representative: Leppard, Andrew John

(57) **Abstract**

An editing apparatus, and a bit rate control method and program are capable of converting a material bit rate of video material to a desired output bit rate without picture quality deterioration in a short time and simply. According to this invention, a bit rate determination unit 2 compares a material bit rate of entered video material S1 to be edited with an output bit rate. In a case where the output bit rate is larger than the material bit rate, the null data insertion unit 5 adds meaningless data to the material data of the video material to convert the material bit rate to the output bit rate. As a result, the material data of the video material S1 can be output without picture quality deterioration with the material bit rate converted to the output bit rate.

## Description

### BACKGROUND OF THE INVENTION

### FIELD OF THE INVENTION

The present invention relates to an editing apparatus, a bit rate control method and a bit rate control program. Embodiments of the present invention relate to a nonlinear editing apparatus for converting the material bit rate of Moving Picture Experts Group (MPEG)-IMX video material into a desired output bit rate to output the video.

### DESCRIPTION OF THE RELATED ART

Conventional nonlinear editing apparatuses make real-time transmission (synchronous transmission) of video material comprising MPEG (IMX) data with different compression rates at an output bit rate defined by, for example, Serial Data Transport Interface-Contents Package (SDTI-CP) standards (for example, refer to Patent Reference 1 Japanese Patent Application Laid Open No. 2000-228652 (Fig. 7, Fig. 8 and Fig. 9))

For converting the material bit rate of video material so as to match an output bit rate of the SDTI-CP, the nonlinear editing apparatuses should decode the video material to restore an uncompressed state and then encode the resultant to obtain a desired compression rate.

Note that the SDTI-CP is digital compression standards of a global standard standardized as Society of Motion Picture and Television Engineers (SMPTE) 326M by the Pro-MPEG forum, and is a synchronous transfer interface for MPEG data.

Such a nonlinear editing apparatus has drawbacks in that original video data cannot be restored completely in a case where video material is returned to an uncompressed state by decoding because the MPEG is an irreversible compression method and picture quality deteriorates if the restored data is encoded again.

Further, in a case of converting a material bit rate of video material having different compression rates so as to match the output bit rate of SDTI-CP for output, the video material is decoded to return to an uncompressed state and then encoded again at a desired compression rate. Therefore, there exist drawbacks in that the decoding and encoding take a lot of time and resources such as decoder and encoder are required.

### SUMMARY OF THE INVENTION

Embodiments of the present invention seek to provide an editing apparatus, a bit rate control method and a bit rate control program capable of converting the material bit rate of video material to a desired output bit rate without picture quality deterioration in a short time and simply.

According to one aspect the present invention provides a bit rate determination means for performing bit rate determination by comparing the material bit rate of entered video material to be edited with an output bit rate to be used, and a bit rate control means for converting the material bit rate to the output bit rate by adding meaningless data to the material data of the video material in a case where the bit rate determination means determines that the output bit rate is larger than the material bit rate.

Since the material bit rate can be converted to the output bit rate by only adding meaningless data to the material data of the video material, the material data of the video material can be output without picture quality deterioration. As a result, an editing apparatus can be realized, which is capable of converting the material bit rate of video material into a desired output bit rate without picture quality deterioration in a short time and simply.

According to another aspect the present invention provides a bit rate determination step of performing bit rate determination by comparing the material bit rate of entered video material to be edited with an output bit rate to be used, and a bit rate control step of converting the material bit rate to the output bit rate by adding meaningless data to the material data of the video material in a case where it is determined in the bit rate determination step that the output bit rate is larger than the material bit rate.

Since the material bit rate can be converted to the output bit rate by only adding meaningless data to the material data of the video material, the material data of the video material can be output without picture quality deterioration. As a result, a bit rate control method can be realized, which is capable of converting the material bit rate of video material into a desired output bit rate without picture quality deterioration in a short time and simply.

Embodiments of the present invention cause an editing apparatus to execute a bit rate determination step of performing bit rate determination by comparing the material bit rate of entered video material to be edited with an output bit rate to be used, and a bit rate control step of converting the material bit rate to the output bit rate by adding meaningless data to the material data of the video material in a case where it is determined in the bit rate determination step that the output bit rate is larger than the material bit rate.

Since the material bit rate can be converted to the output bit rate by only adding meaningless data to the material data of the video material, the material data of the video material can be output without picture quality deterioration. As a result, a bit rate control program can be realized, which is capable of converting the material bit rate of video material into a desired output bit rate without picture quality deterioration in a short time and simply.

Further particular and preferred aspects of the present invention are set out in the accompanying independent and dependent claims. Features of the dependent claims may be combined with features of the independent claims as appropriate, and in combinations other than those explicitly set out in the claims.

### BRIED DESCRIPTION OF THE DRAWINGS

The present invention will be described further, by way of example only, with reference to preferred embodiments thereof as illustrated in the accompanying drawings, in which:
Fig. 1 is a schematic block diagram showing a circuit configuration of a bit rate control circuit of an embodiment of the present invention;
Fig. 2 is a schematic drawing showing a data structure of video material;
Fig. 3 is a flowchart showing a bit rate conversion procedure; and

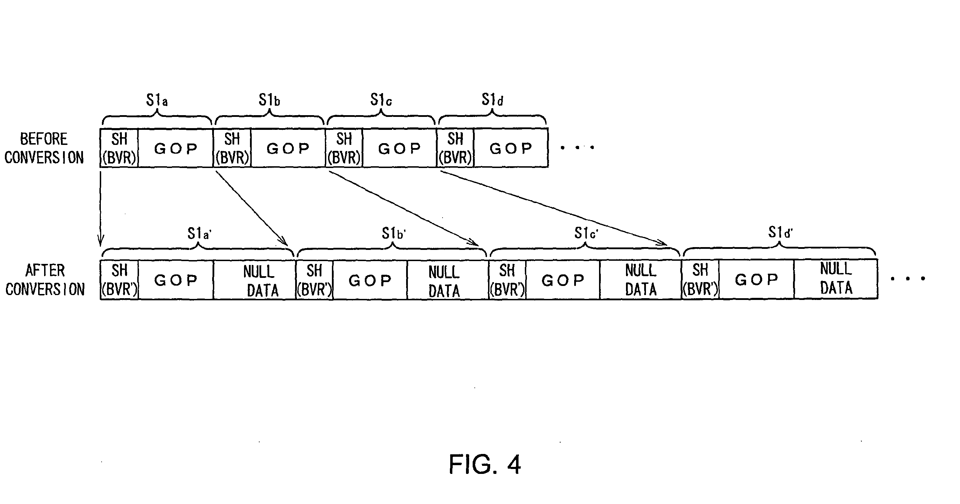

Fig. 4 is a schematic diagram showing a data structure of video material before and after the bit rate conversion.

### DETAILED DESCRIPTION OF THE EMBODIMENT

Preferred embodiments of this invention will be described with reference to the accompanying drawings:

### (1) Configuration of a bit rate control circuit

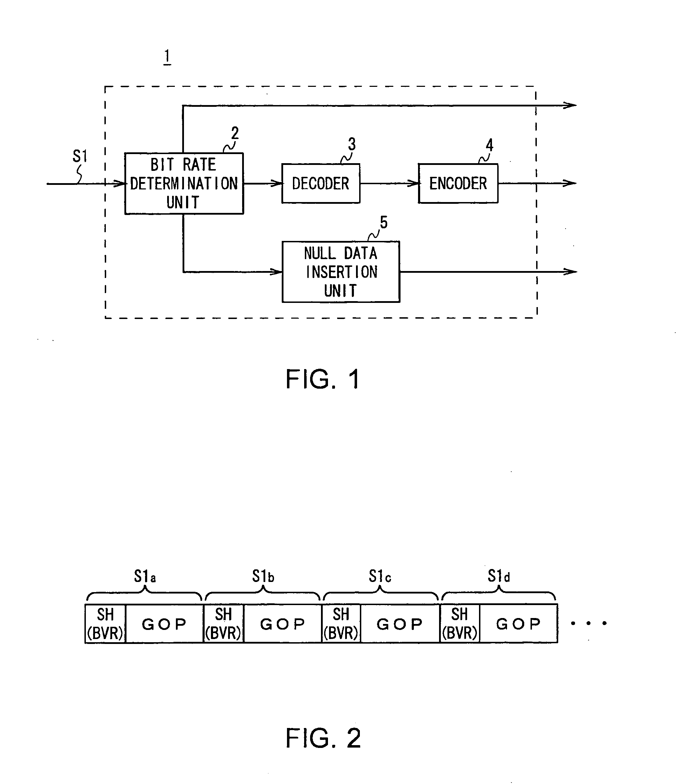

Referring to Fig. 1, reference numeral 1 shows a bit rate control circuit of this embodiment of the present invention to be installed in an editing apparatus. This bit rate control circuit is designed to output video material S1 comprising MPEG data having different compression rates at the material bit rate of the video material S1, to output the video material S1 after compressing and encoding the material S1 via a decoder 3 and an encoder 4 with a desired compression rate, or to output the material S1 at the output bit rate of the SDTI-CP by inserting meaningless "0" data as null data by a null data insertion unit 5, according to a result determined by a bit rate determination unit 2.

As shown in Fig. 2, as a data structure of the video material S1 (S1a, S1b, S1c, S1d, ...), the video material S1a, S1b, S1c, S1d, ... is composed of a sequence header SH and Group of Picture (GOP) data. These video material S1a, S1b, S1c, S1d, ... are sequentially entered in the bit rate determination unit 2 in order.

The sequence header SH of each video material S1 (S1a, S1b, S1c, S1d, ...) stores data indicating a material bit rate called Bit Rate Value (BRV) which indicates a material bit rate of the video material S1.

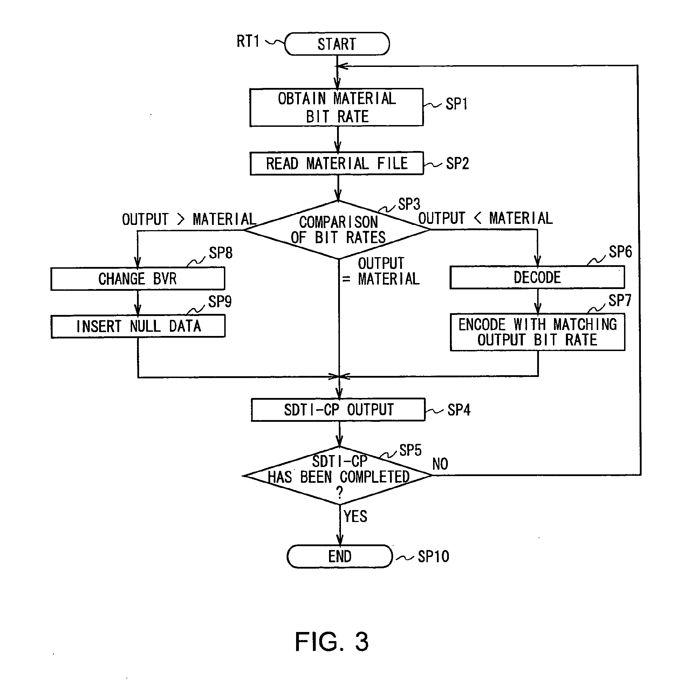

In actual, the bit rate control circuit 1 enters a routine RT1 shown in Fig. 3 at a start step and moves to step SP1 where the circuit 1 reads BRV from the sequence header SH of the first video material S1a to obtain the material bit rate of the video material Sla. Then the process goes on to step SP2.

In step SP2, the bit rate control circuit 1 reads the GOP data (material file) following the sequence header SH, and moves to step SP3.

In step SP3, the bit rate control circuit 1 compares the material bit rate of the video material S1a obtained in step SP1 with the output bit rate of the SDTI-CP, and moves to step SP4, step SP6, or step SP8 depending on the comparison result.

When the material bit rate of the video material S1a matches the output bit rate of the SDTI-CP, the material bit rate of the video material S1 does not need to be converted, so that the bit rate control circuit 1 moves to next step SP4.

In step SP4, the bit rate control circuit 1 performs the SDTI-CP output with the material bit rate of the video material S1a as the output bit rate of the SDTI-CP, and moves to next step SP5.

In step SP5, the bit rate control circuit 1 determines whether the SDTI-CP output has been completed. Since the video material S1a has been processed now, a negative result is obtained and the above process after step SP1 is repeated.

In step SP1 and step SP2, the bit rate control circuit 1 obtains the material bit rate of the next video material S1b and reads the GOP data (material file). In step SP3, the circuit 1 compares the bit rates.

In a case where the material bit rate of the video material S1b obtained in step SP3 is 40 Mbps and the output bit rate of the SDTI-CP is 30 Mbps, for example, the bit rate control circuit 1 moves to next step SP6.

Since the output bit rate is lower than the material bit rate, the bit rate control circuit 1 decodes the video material S1b to return the material to a pre-encoded state in step SP6, and moves to next step SP7.

After decoding in step SP6, the bit rate control circuit 1 performs the compression and encoding to obtain the output bit rate (30 Mbps) in step SP7, and moves to next step SP4.

After performing the SDTI-CP output at the output bit rate (30 Mbps) obtained with the compression and encoding of step SP7 in step SP4, the bit rate control circuit 1 determines in step SP5 whether the SDTI-CP output has been completed. Since the video material S1b has been processed now, a negative result is obtained and the process after step SP1 is repeated.

Again, in step SP1 and step SP2, the bit rate control circuit 1 obtains the material bit rate of the next video material S1c and reads the GOP data (material file). Then the circuit 1 compares the bit rates.

In a case where the material bit rate of the video material S1c obtained in step SP3 is 30 Mbps and the output bit rate of the SDTI-CP is 50 Mbps, for example, the bit rate control circuit 1 moves on to next step SP8.

Since the output rate is larger than the material bit rate, the bit rate control circuit 1 rewrites the BRV value to the output bit rate in step SP8, and moves to next step SP9.

In step 9, the bit rate control circuit 1 inserts meaningless null data (continuous "0" data) in the GOP data of the video material S1c to convert the material bit rate (30 Mbps) to the output bit rate (50 Mbps), and moves on to next step SP4.

In step SP4 and step SP5, the bit rate control circuit 1 performs the SDTI-CP output at the output bit rate (50 Mbps) obtained in step SP9, and determines whether the SDTI-CP output has been completed. The video material S1c has been processed now, a negative result is obtained and the above process after step SP1 is repeated.

### (2) Operation and Effects

In the above configuration, the bit rate control circuit 1 of the editing apparatus sequentially compares the material bit rates of the video material S1a, S1b, S1c, S1d, ... with the output bit rate of the SDTI-CP. In a case where the output bit rate is larger than a material bit rate, for example, in a case of the video material S1c, the material S1c is output with the material bit rate converted to the output bit rate of the SDTI-CP by adding null data to the untouched GOP data.

To convert the material bit rate to the output bit rate of the SDTI-CP, the bit rate control circuit 1 does not process the GOP data but only adds null data. Therefore, the picture quality does not deteriorate. In addition, decoding and encoding are not required, so that the bit rate conversion can be performed in a short time and simply without resources such as a decoder and an encoder.

In addition, in a case where a material bit rate and the output bit rate are the same, for example, in a case of the video material S1a, the bit rate control circuit 1 is able to output the material S1a at the untouched material bit rate. In a case where a material bit rate is larger than the output bit rate, for example, in a case of the video material S1b, the bit rate control circuit 1 is able to perform decoding and then encoding as in the conventional case.

As described above, the bit rate control circuit 1 is able to perform the most appropriate bit rate conversion depending on the comparison result of a material bit rate and the output bit rate, so that the circuit 1 does not select a bit rate of received video material S1 (S1a, S1b, S1c, S1d, ...) and is able to perform the most appropriate bit rate conversion of the material bit rate to the output bit rate.

According to the above configuration, in a case where the output bit rate of the SDTI-CP is larger than the material bit rate of the received video material S1, the bit rate control circuit 1 converts the material bit rate of the video material S1 to a desired output bit rate without picture quality deterioration in a short time and simply.

### (3) Other embodiments

The above embodiment has described a case where "0" data is added to GOP data as meaningless null data. However, embodiments are not limited to this and "1" data can be added, provided that the data is meaningless.

Further, the above embodiment has described a case where a material bit rate is converted so as to match the output bit rate of the SDTI-CP. However, embodiments are not limited to this, and the material bit rate can be converted so as to match the output bit rate of material exchange format (MXF) which is an MPEG moving picture transfer format or can be converted so as to match another output bit rate, for example, an output bit rate of an input/output interface of a video signal recording file.

Still further, the above embodiment has described the bit rate control circuit 1 having a hardware structure shown in Fig. 1. However, the embodiments are not limited to this and can be realized by software so as to perform a bit rate conversion process with an application program.

Still further, the above embodiment has described a case where the bit rate control circuit 1 to be installed in the editing apparatus of this invention is composed of the bit rate determination unit 2 as a bit rate determination means, and a null data insertion unit 5 as a bit rate control means. However, the embodiments are not limited to this and the bit rate control circuit 1 can have another various circuit structure.

The editing apparatus, bit rate control method and bit rate control program of embodiments of this invention can be applied for converting a material bit rate of video material to be edited by an editing apparatus so as to match an output bit rate, for example.

Hence, an editing apparatus, and a bit rate control method and program are capable of converting a material bit rate of video material to a desired output bit rate without picture quality deterioration in a short time and simply. A bit rate determination unit 2 compares a material bit rate of entered video material S1 to be edited with an output bit rate. In a case where the output bit rate is larger than the material bit rate, the null data insertion unit 5 adds meaningless data to the material data of the video material to convert the material bit rate to the output bit rate. As a result, the material data of the video material S1 can be output without picture quality deterioration with the material bit rate converted to the output bit rate.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An editing apparatus comprising:
bit rate determination means for performing bit rate determination by comparing a material bit rate of entered video material to be edited with an output bit rate to be used; and
bit rate control means for converting said material bit rate to said output bit rate by adding meaningless data to material data of said video material in a case where said bit rate determination means determines that the output bit rate is larger than the material bit rate.

2. The editing apparatus according to claim 1, wherein
said bit rate control means adds "0" data as said meaningless data.

3. The editing apparatus according to claim 1, wherein
said bit rate control means performs output without converting said material bit rate in a case where said output bit rate and the material bit rate are the same, and decodes and then encodes said video material so as to match the output bit rate in a case where the material bit rate is larger than the output bit rate.

4. A bit rate control method comprising:
a bit rate determination step of performing bit rate determination by comparing a material bit rate of entered video material to be edited with an output bit rate to be used; and
a bit rate control step of converting said material bit rate to said output bit rate by adding meaningless data to material data of said video material in a case where it is determined in said bit rate determination step that the output bit rate is larger than the material bit rate.

5. The bit rate control method according to claim 4, wherein,
in said bit rate control step, "0" data is added as said meaningless data.

6. The bit rate control method according to claim 4, wherein,
in said bit rate control step, output is performed without converting said material bit rate in a case where it is determined that said output bit rate and the material bit rate are the same, and said video material is decoded and then encoded so as to meet the output bit rate in a case where the material bit rate is larger than the output bit rate.

7. A bit rate control program causing an editing apparatus execute:
a bit rate determination step of performing bit rate determination by comparing a material bit rate of entered video material to be edited to an output bit rate to be used; and
a bit rate control step of converting said material bit rate to said output bit rate by adding meaningless data to material data of said video material in a case where it is determined in said bit rate determination step that the output bit rate is larger than the material bit rate.

8. The bit rate control program according to claim 7, wherein,
in said bit rate control step, "0" data is added as said meaningless data.

9. The bit rate control program according to claim 7, wherein,
in said bit rate control step, output is performed without converting said material bit rate in a case where it is determined that said output bit rate and the material bit rate are the same, and said video material is decoded and then encoded so as to meet the output bit rate in a case where the material bit rate is larger than the output bit rate.
